# EUROPEAN PATENT SPECIFICATION

(11) **EP 1 152 664 B1**
(45) Date of publication and mention of the grant of the patent: **10.05.2006**
(21) Application number: 00903562.7
(22) Date of filing: 14.02.2000
(51) Int. Cl.: A22C 17/02, A22B 5/06

(54) **A METHOD OF DEBONING HALF PIG CARCASSES**
VERFAHREN ZUM ENTBEINEN VON SCHLACHTSCHWEINEHÄLFTEN
PROCEDE DE DESOSSAGE DE DEMI-CARCASSES DE PORCS

(30) Priority: 16.02.1999 DK 20499
(43) Date of publication of application: 14.11.2001
(73) Proprietor: Butina APS, 4300 Holbaek (DK)
(72) Inventor: KILDEGAARD, Jacob, DK-2900 Hellerup (DK); KILDEGAARD, Ejvind, DK-4300 Holbaek (DK); HAUMANN, Klaus, DK-2820 Gentofte (DK)
(74) Representative: Thierry-Carstensen, Ole Jean
(86) International application number: PCT/DK2000/000059
(87) International publication number: WO 2000/048468

(56) References cited:
- EP-A1- 0 300 940
- EP-A1- 0 365 452
- FR-A- 2 147 359
- FR-A1- 2 598 887
- GB-A- 2 114 424
- GB-A- 2 272 360
- US-A- 4 389 749

## Description

The invention relates to a method of deboning half pig carcasses, optionally without the head, whereby the half carcass is advanced while suspended in a suspension means on an overhanging conveyor and the calcaneal tendon is partly cut free.

### Background Art

It is known to debone cattle carcasses while said carcasses are suspended in a suspension means. When it is a question of a hind quarter of a cow, said quarter is usually suspended in a hook which is inserted in an opening extending transverse to the Achilles or calcaneal tendon adjacent the free end thereof once said Achilles tendon has been cut free of the calcaneum. Such a suspension method cannot be used in connection with pigs because the Achilles Tendon or the calcaneal tendon of pigs is too weak.

FR-A-2598887 discloses a method of deboning a hind quarter of a slaughter animal whereby a hook is inserted into a slot cut between the calcaneal tendon and the adjacent bone.

Methods are also known whereby the pig carcasses are removed from a conveyor so as subsequently to be subjected to a cutting and a deboning on work tables. The existing methods are often carried out in several steps involving a conveying into or out of a cooling chamber while the parts are suspended on so-called "Christmas trees", said parts being stored in the cooling chamber until they can be advanced to a deboning station. These deboning stations often require much room for the work tables on which the parts are subjected to various deboning processes.

### Brief Description of the Invention.

The object of the invention is to provide a method whereby it is possible to simplify the deboning process in such a manner that much room is no longer required.

The method according to the invention is characterised in that the calcaneal tendon (tendo calcaneus) is cut free of the hind toe by severing the calcaneum (os calcaneus) in such a manner that a portion of said calcaneum is left in connection with said calcaneal tendon, that the half pig carcass is then fastened to a suspension means which is caused to engage the calcaneal tendon cut free, and that the half pig carcass is then subjected to a substantially continuous deboning while fixed at the hind toe and the calcaneal tendon, respectively. As a result, the entire half pig carcass with or without a head can be deboned while fixed in one and the same suspension means on the overhanging conveyor. The latter is in particular due to the fact that tests have shown that together the calcaneal tendon cut free and the remaining portion of the calcaneum present a strength sufficient for carrying the half pig carcass. Therefore it is no longer necessary to involve an extensive conveying of pieces of the slaughtered pig out of and into cooling chambers as well as an extensive advancing thereof to the various deboning stations. Consequently, it is no longer necessary to have much room for the latter procedures. As the deboning is carried out while the pig carcass is suspended and consequently not placed on a work table optionally involving an accumulation of bacteria in the cuttings, an improved production hygiene is obtained. In addition, the processing until the completing trimning can in response to the use of the primary products be carried out much faster than previously. As the pig carcass remains suspended in the same suspension means during the deboning process, improved working conditions are ensured for the slaughterhouse workers because the working position is facilitated and it is no longer necessary to move heavy pieces of the pig carcass. Therefore it is also possible to carry out the entire deboning process at a relatively high speed. The deboning can, if desired, be followed by a cutting and trimning procedure while the deboned pig carcass still remains suspended on the suspension means. The inner piece of a loin of pork can be removed before the deboning process is initiated.

According to the invention it is particularly advantageous when the suspension means is in form of a single hook, and the securing thereto is improved by initially cutting a substantially vertical cut through the calcaneal tendon for the insertion of said single hook, whereafter the calcaneum is cut free of the hind toe in such a manner that a portion of said calcaneum is still attached to the calcaneal tendon. As a result, the fastening of the single hook is facilitated.

According to the invention, the shoulder blade can advantageously be loosened in the natural membrane before the actual deboning is initiated by means of a substantially vertical cut in such a manner that said shoulder is left in a piece of pork which is connected to the remaining portion of the pig carcass at an area adjacent the neck. As a result, the following deboning of the ribs is facilitated.

Finally, the deboning may according to the invention be carried out substantially while maintaining the interconnection of the skeleton, whereby during the entire deboning process it is possible to maintain said skeleton in a separate suspension system and consequently to subject said skeleton to any desired pulling off force during said deboning process.

### Brief Description of the Drawings

The invention is explained in greater detail below with reference to the accompanying drawings, in which
Fig. 1 illustrates a pig carcass suspended in a gambrel in an overhanging conveyor in form of a rail,
Fig. 2 is a rear view of a portion of the hind part (the ham) of a half pig carcass,
Fig. 3 is a side view of the portion of Fig. 2 after a cutting into two of the calcaneum, where some of the bones therein are indicated by means of solid lines, and where parts of the calcaneal tendon are indicated by means of dotted lines,
Fig. 4 is a side view also of the portion of Fig. 2 after insertion of a single hook,
Fig. 5 illustrate parts of two half pig carcasses suspended in their respective ends of a gambrel and prepared for a removal of said gambrel after the mounting of the single hook in the calcaneal tendon and a placing of said hook on an advancing rail,
Fig. 6 illustrates a half pig carcass, seen from the back thereof, during the preparation thereof for a cutting out of the skeleton parts of the ham,
Fig. 7 is a side view of the half pig carcass of Fig. 6 with a pulling means and the associated fastening members connected to the hind toe,

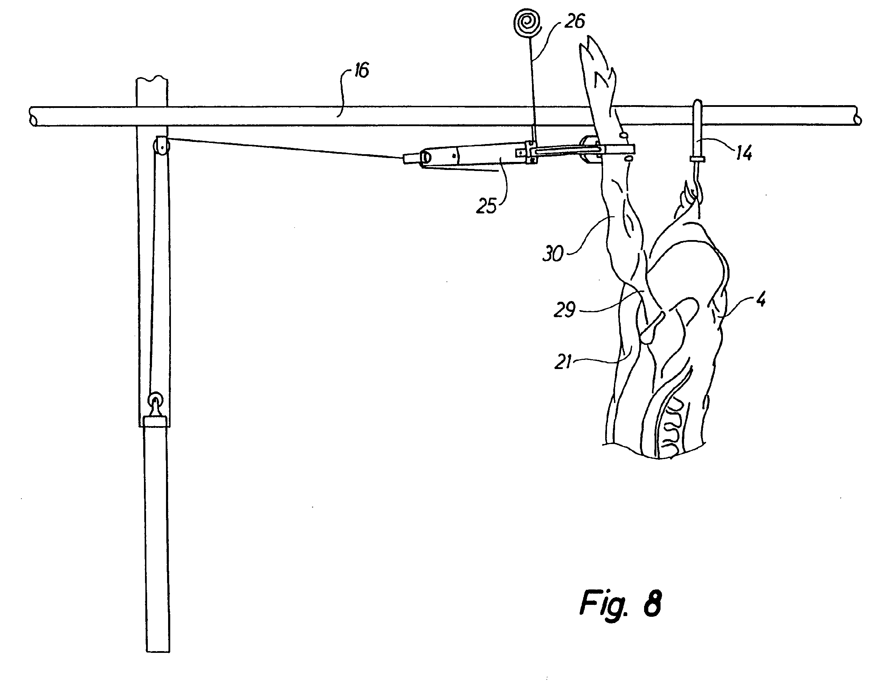

Fig. 8 illustrates on a larger scale some parts of the half pig carcass of Fig. 7 during the cutting out of the hind toe, the radius, the knee joint and the humerus,
Fig. 9 illustrates a station adapted to loosen the ribs by means of a suitable fastening means for fixing the half pig carcass,
Fig. 10 corresponds to Fig. 9, but with the half pig carcass in the fixed state,
Fig. 11 illustrates a half pig carcass, seen from the back thereof, where the spine with the ribs are about to be cut out,
Fig. 12 illustrates a subsequent station with a half pig carcass in the fixed state and ready for a pulling out of the shoulder blade, and
Fig. 13 illustrates a frame to be used during the pulling out of the shoulder blade.

### Best Mode for Carrying Out the Invention

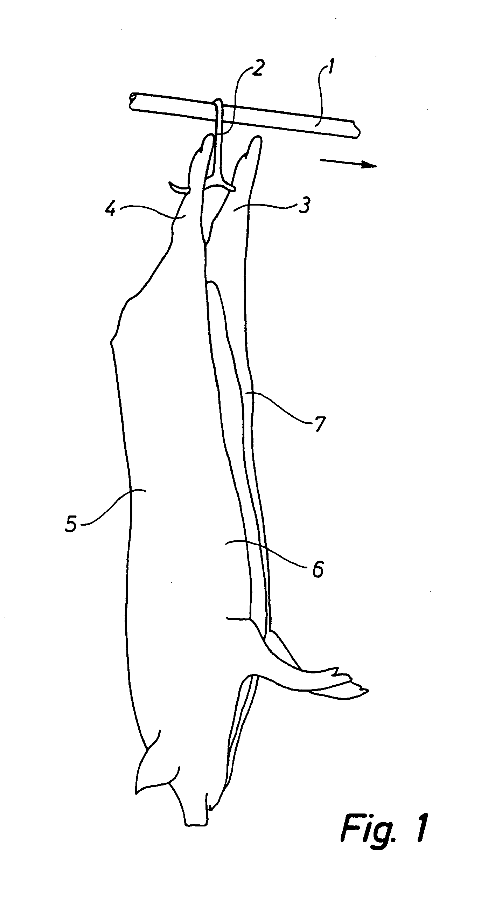

The plant according to the invention comprises a conveyor arranged at a high level in a room for deboning the pig carcass. This conveyor is of a type known per se and accordingly not completely shown. The conveyor implies that the pig carcasses are advanced to various succeeding processing stations suspended in suitable hooks. Fig. 1 is a diagrammatic view of the conveyor in form of a rail 1. Gambrels 2 are hooked on the rail and comprises projecting hooks for fastening their respective hind leg 3 and 4 of a pig carcass 5. The pig carcass 5 is suspended in the gambrel 2 and is now ready for the deboning process in question. Thus the pig carcass 5 usually leaves the cooling chamber in an eviscerated state and optionally also with the head cut off. Under all circumstances, the pig carcass must be eviscerated before the deboning process in question is initiated. In addition, the pig carcass 5 must be cut in two in the longitudinal direction in such a manner that two separated half pig carcasses 6 and 7 are suspended in the gambrel 2.

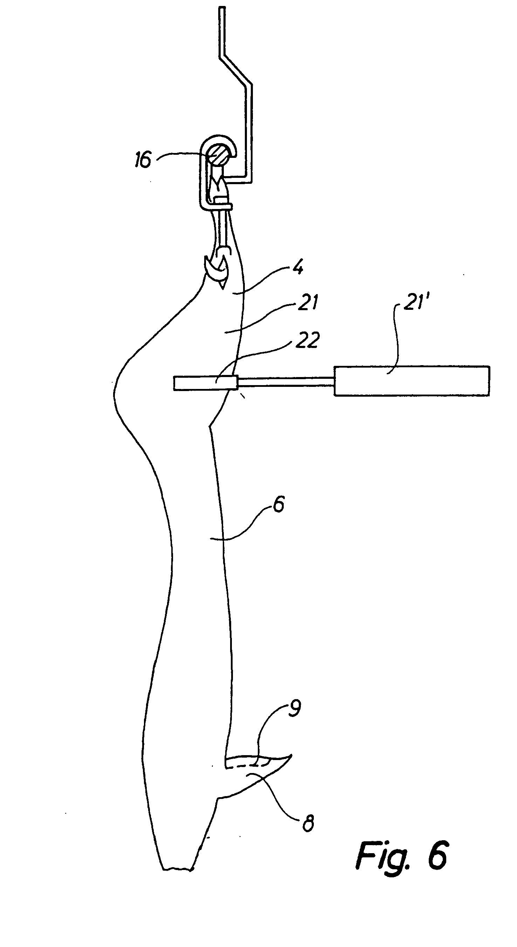

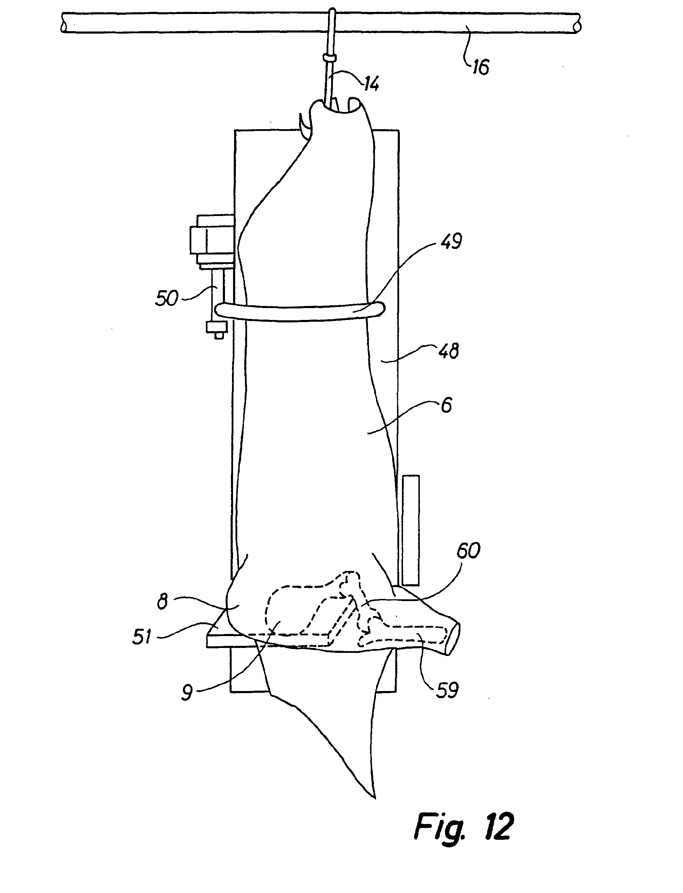

At a first station, the serial number is registered followed by a weighing of the half pig carcasses. In addition, the inner pieces of a loin of pork visible on the inner side of the half pig carcasses 6 are removed. Then the shoulder blade is loosened in a manner not shown in greater detail in the natural membrane on each side of the half pig carcasses. The latter is carried out by a substantially vertical cut from above on a level with the inner side of the shoulder blade in question. As a result, the shoulder blade is left in a fold or a piece of pork 8, cf. Figs. 6 and 12, where the shoulder blade is indicated by means of dotted lines at the reference numeral 9.

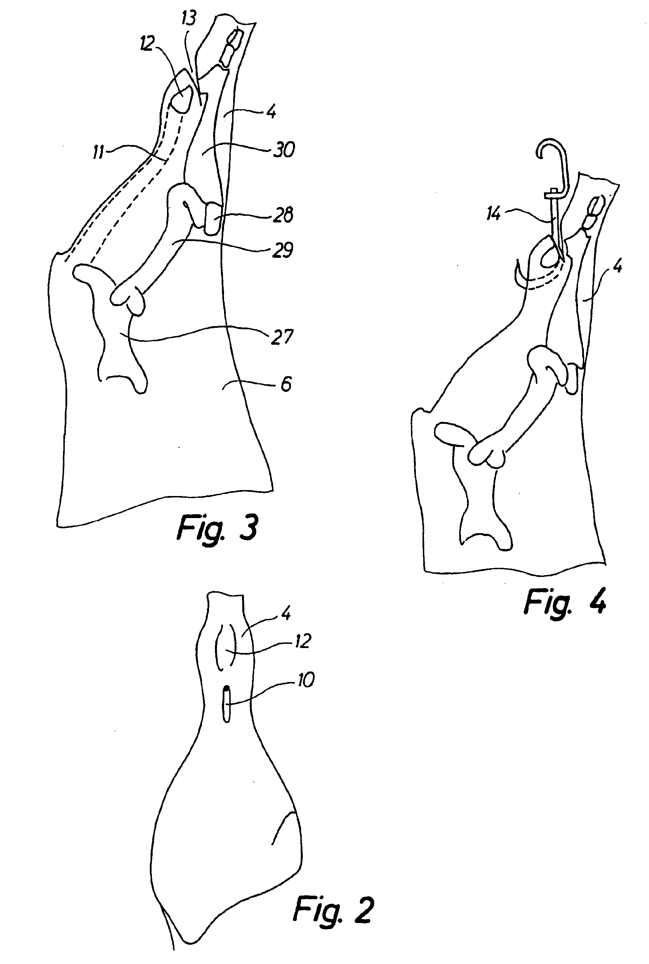

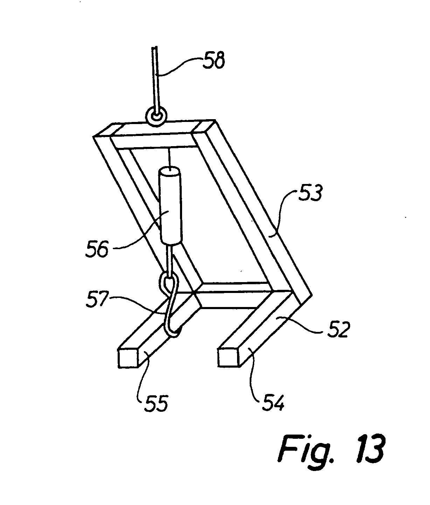

At a subsequent station, a cut is placed from the outside and centrally into the calcaneal tendon 11, viz. the Achilles tendon, cf. Figs. 2 to 4, said calcaneal tendon being indicated by means of dotted lines in Fig. 3 immediately adjacent the knob or the calcaneum 12. Then the calcaneum is sawn over, cf. Fig. 13, by a cut 13 in such a manner that the calcaneal tendon 11 is loosened from the connection to the bones in the lower portion of the hind leg 4, a piece of said calcaneum 12 being left in connection with said calcaneal tendon 11. At the opposite end the calcaneal tendon is connected to the ham muscle. Then a single hook 14 is inserted through the cut 13 extending through the calcaneum 12, and further outwards through the cut 10 extending through the calcaneal tendon 11, cf. Fig. 4. It should be noted that in Figs. 3 and 4 the bones of the hind leg 4 are indicated by means of solid lines, but in the present situation they are not visible.

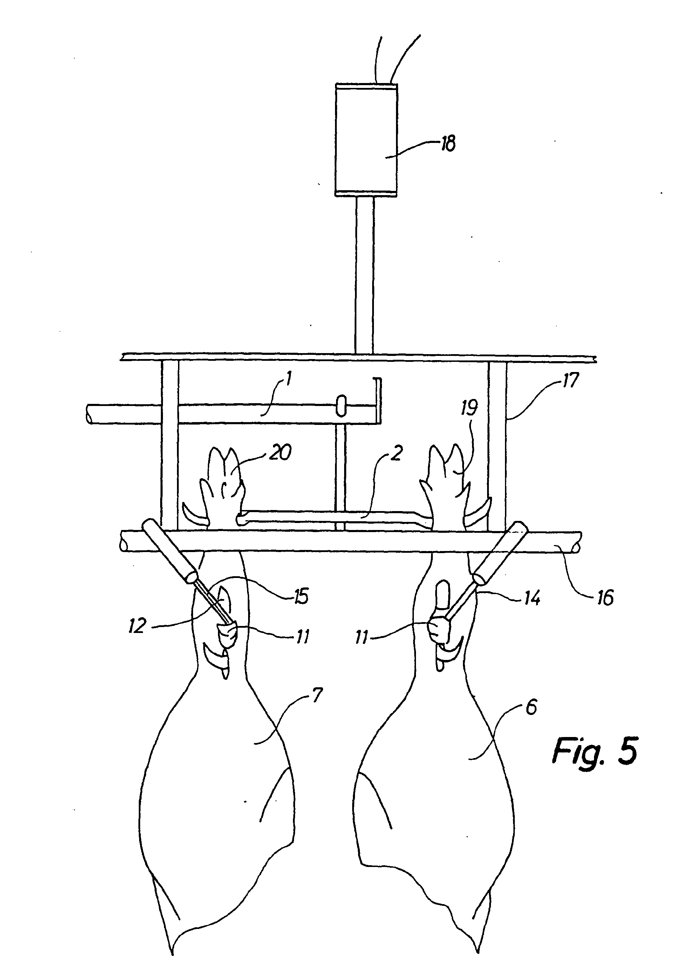

After the fastening of the hook 14 and a corresponding hook 15 in the same manner in the second half pig carcass 7, these hooks 14 and 15 are placed as shown in Fig. 5 on a rail 16 arranged at a high level. After removal of the gambrel 2, the half pig carcasses 5, 6 are advanced on this rail 16 during the entire deboning process.

In order to allow an elevation and lowering of the rail 16, the associated supporting frame 17 is suitably suspended in pneumatic or hydraulic cylinders 18.

From the third station shown in Fig. 5 where the half pig carcasses 6, 7 were transferred from the gambrels 2 to their respective single hooks 14 and 15, said half pig carcasses are advanced while exclusively suspended in the calcaneal tendon. In other words, the hind toe 19, 20 has been released.

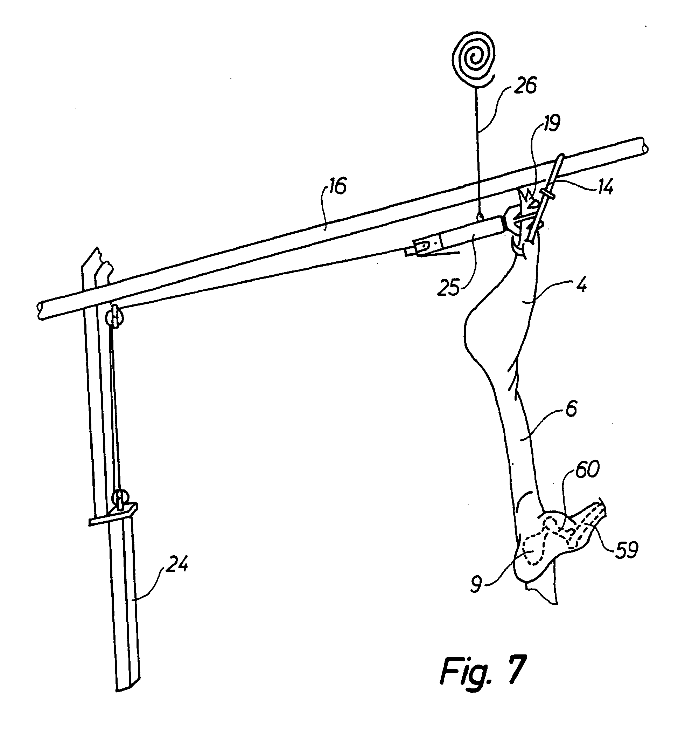

At the next station, the deboning of the ham 21 is initiated, cf. Figs. 6 and 7. For this purpose a cylinder 22 with a strap 23 is used, said strap 23 being adapted to fix the ham 21 during the deboning process by being extended from a cylinder 21'. Furthermore, the hind toe 19 is connected to a pulling means also in form of a pneumatic cylinder 24 through a fastening member 25. The fastening member 25 is suspended at a suitable location by means of a balancing means 26 so as to ensure that the hind toe 19 is pulled away from the hook 14 in the desired direction at a pull in the pulling means 24.

The further deboning of the ham is initiated by the outer pork on the clavicle 27, cf. Fig. 3, being cut off, the knee joint 28 being opened into the humerus 29, the inner bone and the lump of bone being opened in the natural membrane, the radius 30 and the humerus 29 being uncovered followed by the clavicle crest being loosened. The skeleton parts are then pulled out of the ham 21 by means of the pulling means 24 at the same time as they are subjected to a deboning by means of a knife. The processing continues with a cutting free of the lower part of the spine and consequently with a cutting free of the loin vertebrae and the flat bones (not shown). The processing is terminated by the interconnected skeleton parts in question optionally being cut in two at the hip joint as they may present an obstacle during the following procedure.

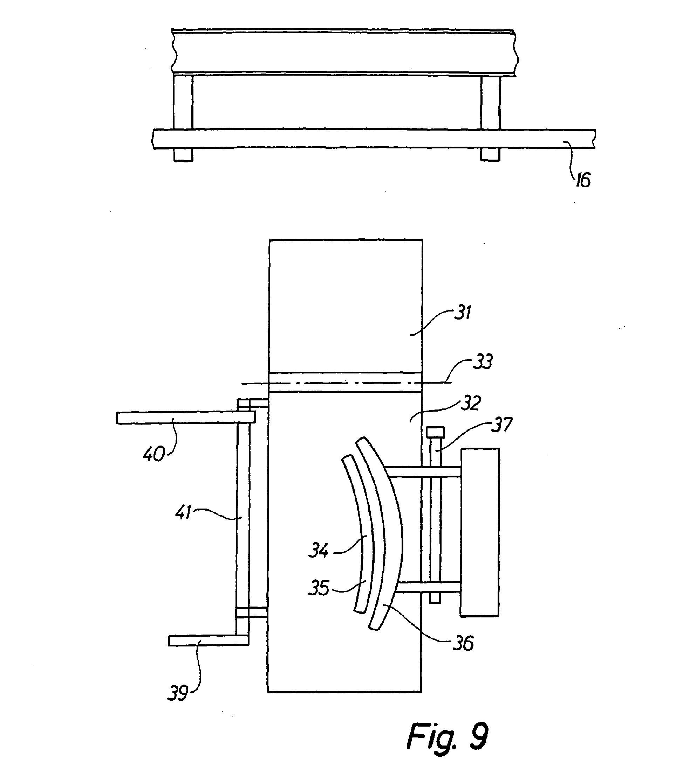

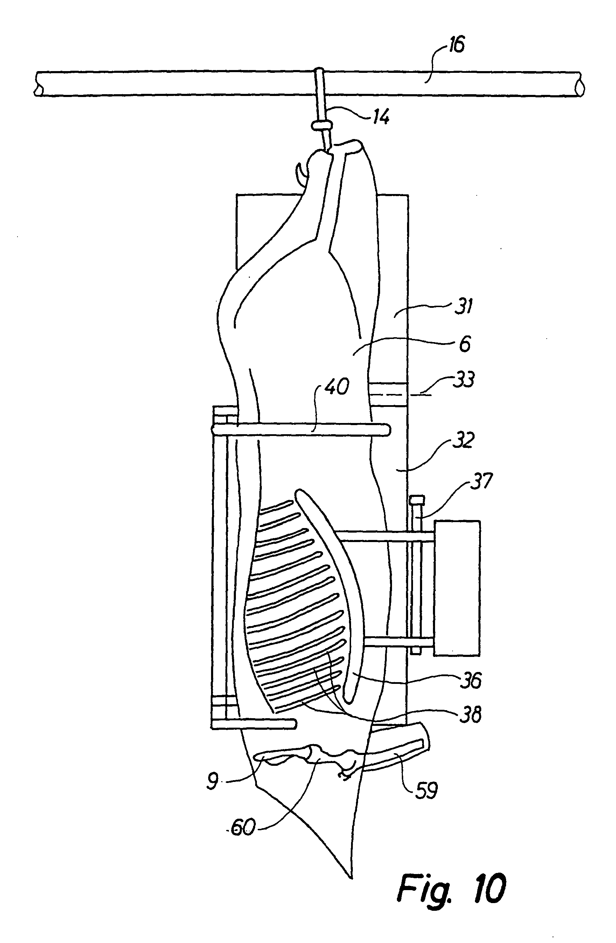

At a subsequent station, cf. Fig. 9, the ribs are subjected to a preparation and loosening for the complete cutting free of the spine with the ribs. This station comprises two plates 31, 32, cf. Fig. 9, which are hingedly interconnected about a horizontal axis 33, said plates 31, 32 being hingedly suspended in a manner not described in greater detail in a frame not shown at the station in question. These plates are adapted to be activated by pneumatic cylinders present on the rear side and not shown either. These pneumatic cylinders allow the two plates 31 and 32 to be arranged in a desired inclination relative to vertical and with a mutual angle position. A first strap 34 is mounted on the front side of the plate 32. This strap 34 comprises a surface 35 facing away from the plate 32 and extending parallel to said plate. This strap 34 is of such a curvature that once the half pig carcass is placed in contact with the plates 31 and 32, cf. Fig. 10, said strap abuts the outer side of said half pig carcass 6 in a portion opposite the ribs immediately adjacent the free ends of said ribs. A correspondingly shaped second strap 36 is pivotally journalled about a vertical shaft 37 in such a manner that it can swing away from the portion opposite the plate 32 during the placing of the half pig carcass in contact with the strap 34 and the initial loosening of the ribs indicated by the reference numeral 38. The second strap 36 is of such a shape that when it is subsequently swung into contact with the pig carcass 6, it follows the tips of the ribs 38, the strap abutting said pig carcass outside the ribs 38 and consequently at a level being staggered relative to the underlying first strap 34 in a direction parallel to the plate 32.

In connection with the plate 32 clamping straps 39 and 40 are also hingedly secured to a shaft 41. These clamping straps 39 and 40 are adapted by means of activating means not shown to be turned into abutment against the inner side of the pig carcass 6, cf. Fig. 10, and thereby to fix said pig carcass in abutment against the plate 32.

When the pig carcass 6 has been arranged in abutment against the plate 32 and fixed by means of the clamping straps 39 and 40, the operator subjects the ribs 38 to a preparation for the following removal. The latter preparation implies that the rib membrane is pulled off or scraped of manually by means of a knife, the rib heads are cut off by means of a circular cutter, and the flat bones are cleaned with respect to possible remaining pork on the top side in response to the use as well as loosened on the inner side in such a manner that they are free to the loin vertebrae. Then the said second strap 36 is swung into abutment against the pig carcass in such a manner that the pork opposite the tips of the ribs 38 are pressed against the plate 32. Now the operator loosens the ribs by means of a device of a conventionally known type which comprises a loop-shaped wire inserted below the ribs and pulled back to the connection of the ribs 38 with the spine.

While the ribs 38 are being loosened, the plates 31 and 32 can be placed according to desire on a suitably inclining position in such a manner that the working process is facilitated.

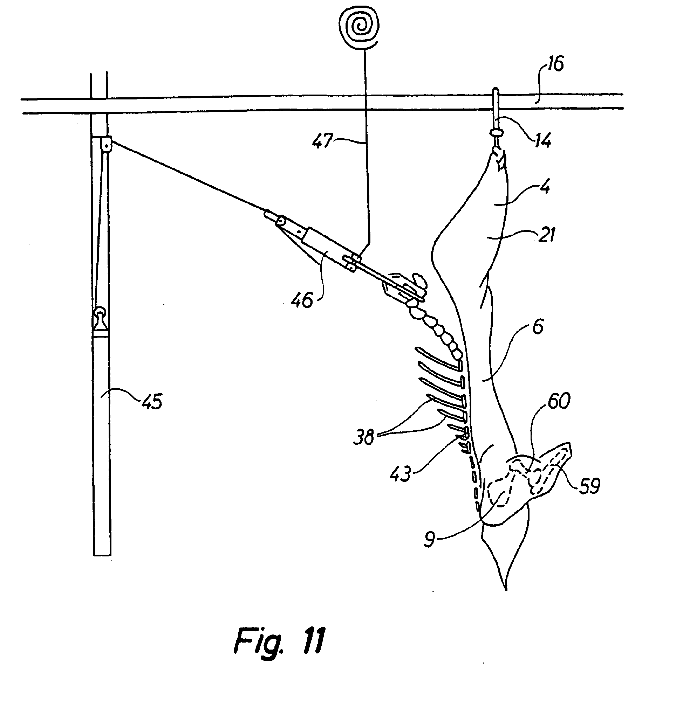

Then the straps 36, 39 and 40 are removed, and the half pig carcass is advanced to the next station, cf. Fig. 11, where a cutting off of the loin, the back and neck vertebrae 42, 43 and 44, respectively, is performed, cf. Fig. 11, the ribs 38 being cut off automatically. This cutting off of the loin, the back and the neck vertebrae 42, 43 and 44 is carried out by means of a pulling means 45 being connected to the loin vertebrae 44 by means of a fastening member 46. The pulling means 45 and the fastening member 46 correspond to the member shown in Fig. 7, and the fastening means 46 is here also suspended in a balancing device 47. As far as possible this processing is carried out without damaging the subjacent musculature. After the cutting off of the neck vertebrae, the half pig head, if any, is also cut off the remaining portion of the pig carcass.

Subsequently the half pig carcass is advanced to a station, cf. Fig. 12, where the shoulder blade 9 is removed. This station comprises a plate 48 with a fastening strap 49 pivotally journalled on a shaft 50 and adapted to fasten the half pig carcass 6. The plate 48 in question carries at its lower end a vertically displaceable supporting plate 51 which is adapted to and dimensioned such that it can be displaced upwards under the piece or lump of pork 8 with the shoulder blade 9 projecting on the outer side of the pig carcass 6. While supported by this plate 51, the operator can subsequently loosen the shoulder blade on the top side as well as along the sides, whereafter said shoulder blade 9 is pulled off by means of pulling-off means 52 for this purpose, cf. Fig. 13. This pulling-out means 52 for the shoulder blade comprises a frame 53 with legs 54, 55 extending in parallel and to be arranged on their respective sides of said shoulder blade 9 so as to abut the piece of pork 8. The frame 53 is inclined relative to the legs 54 and 55, and at the top it carries a pneumatic cylinder 56 which can be hooked to said shoulder blade 9 by means of a hook 57 so as to pull off said shoulder blade 9. The frame 53 is suspended by means of a wire 58 in such a manner that it can easily be turned into the correct position above the shoulder blade.

The deboning process is terminated by the radius 58 and the humerus 60, cf. Fig. 12, being cut out of the foreleg optionally at a separate station. Now the pig carcass is completely free of skeleton parts and is hanging substantially in one piece on each hook 14, said pig carcass still be hanging exclusively in the calcaneal tendon.

After the deboning process the pig carcass can be advanced according to desire to cooling chambers or to a trimning in response to the desired subsequent use.

The invention has been described with reference to a preferred embodiment. Many modifications can be carried out without thereby deviating from the scope of the invention. The skeleton can for instance be completely cut out in one coherent piece during the entire cutting out procedure by an advancing parallel to the advancing on the rail 16 of the conveyor of a pulling means with an associated fastening means for fixing and pulling off said skeleton, said skeleton being subjected to a desired pull during the various deboning steps. Instead of being suspended on a hook on the conveyor, the pork part can be subjected to pulling off forces while the skeleton part is hanging directly in said conveyor.

## Claims

1. A method of deboning half pig carcasses (6, 7), optionally without the head, whereby the half pig carcass (6, 7) is advanced in a suspension means (2) on an overhanging conveyor (1) and the calcaneal tendon is partly cut free, **charac-terised** in that the calcaneal tendon (tendo calcaneus) (11) is cut free of the hind toe by severing the calcaneum (os calcaneus) (12) in such a manner that a portion of said calcaneum is left in connection with the calcaneal tendon (11), that the half pig carcass (6, 7) is then fastened to a suspension means (14, 15) which is caused to engage the calcaneal tendon (11) cut free, whereafter the half pig carcass (6, 7) is subjected to a substantially continuous deboning while fixed at the hind toe and the calcaneal tendon (11), respectively.

2. A method as claimed in claim 1, **characterised in that** the suspension means is in form of a single hook (14, 15), and the securing thereto is improved by initially cutting a substantially vertical cut through the calcaneal tendon (11) for the insertion of said single hook (14, 15), whereafter the calcaneum (12) is cut free of the hind toe (19, 20) in such a manner that a portion of said calcaneum (12) is still attached to the calcaneal tendon (11).

3. A method as claimed in claim 1 or 2, **characterised in that** the shoulder blade (9) is loosened in the natural membrane before the actual deboning is initiated by means of a substantially vertical cut in such a manner that said shoulder is left in a piece of pork (8) which is connected to the remaining portion of the pig carcass at an area adjacent the neck.

4. A method as claimed in claim 1, 2 or 3, **characterised in that** the deboning is carried out substantially while maintaining the interconnection of the skeleton.

## Patentansprüche

1. Verfahren zum Ausbeinen halber Schweineschlachtkörper (6, 7), optional ohne den Kopf, wobei der halbe Schweineschlachtkörper (6, 7) an einem Aufhängungsmittel (2) an einem Überhangbeförderungsmittel (1) befördert wird und die Fersensehne teilweise freigeschnitten wird, **dadurch gekennzeichnet, dass** die Fersensehne (tendo calcaneus) (11) von der Hinterzehe freigeschnitten wird, indem das Fersenbein (os calcaneus) (12) derart getrennt wird, dass ein Teil des Fersenbeins mit der Fersensehne (11) verbunden gelassen wird, so dass der halbe Schweineschlachtkörper (6, 7) anschließend an einem Aufhängungsmittel (14, 15) befestigt wird, das veranlasst wird, mit der freigeschnittenen Fersensehne (11) in Eingriff zu gelangen, woraufhin der halbe Schweineschlachtkörper (6, 7) einem im Wesentlichen kontinuierlichen Ausbeinen unterzogen wird, während er an der hinteren Zehe bzw. der Fersensehne (11) befestigt ist.

2. Verfahren nach Anspruch 1, **dadurch gekennzeichnet, dass** das Aufhängungsmittel die Form eines einzelnen Hakens (14, 15) aufweist, wobei die Befestigung daran verbessert wird, indem anfangs ein im Wesentlichen vertikaler Schnitt durch die Fersensehne (11) zum Einführen des einzelnen Hakens (14, 15) geschnitten wird, woraufhin das Fersenbein (12) von der hinteren Zehe (19, 20) derart freigeschnitten wird, dass ein Abschnitt des Fersenbeins (12) weiterhin an der Fersensehne (11) befestigt ist.

3. Verfahren nach Anspruch 1 oder 2, **dadurch gekennzeichnet, dass** das Schulterblatt (9) vor dem Einleiten des tatsächlichen Ausbeinens in der natürlichen Membran mittels eines im Wesentlichen vertikalen Schnittes gelöst wird, derart, dass die Schulter in einem Schweinefleischstück (8) belassen wird, welches mit dem übrigen Abschnitt des Schweineschlachtkörpers an einem Bereich nahe dem Nacken verbunden ist.

4. Verfahren nach Anspruch 1, 2 oder 3, **dadurch gekennzeichnet, dass** das Ausbeinen im Wesentlichen während der Aufrechterhaltung der Verbindung des Skeletts ausgeführt wird.

## Revendications

1. Procédé pour désosser des demi-carcasses de porc (6, 7), éventuellement présentées sans tête, dans lequel la demi-carcasse de porc (6, 7) est transportée dans un moyen de suspension (2) porté par un dispositif d'amenée suspendu (1) et dans lequel le tendon calcanéen est partiellement libéré par découpage, **caractérisé en ce que** le tendon calcanéen (tendo calcaneus) (11) est libéré de l'orteil postérieur par découpage en sectionnant le calcanéum (os calcaneus) (12) de sorte qu'une partie dudit calcanéum reste attachée au tendon calcanéen (11), que la demi-carcasse de porc (6, 7) est ensuite suspendue à un moyen de suspension (14, 15) qui est amené à engager le tendon calcanéen (11) libéré par découpage, après quoi la demi-carcasse de porc (6, 7) est soumise à un désossage essentiellement continu tandis qu'elle est fixée par l'orteil postérieur et le tendon calcanéen (11), respectivement.

2. Procédé selon la revendication 1, **caractérisé en ce que** le moyen de suspension consiste en un crochet simple (14, 15) et que la fixation effectuée sur celui-ci est améliorée en pratiquant initialement une découpe essentiellement verticale à travers le tendon calcanéen (11) afin d'y insérer ledit crochet simple (14, 15), après quoi le calcanéum (12) est libéré de l'orteil postérieur (19, 20) par découpage de sorte qu'une partie dudit calcanéum (12) soit toujours rattachée au tendon calcanéen (11).

3. Procédé selon la revendication 1 ou 2, **caractérisé en ce que** l'omoplate (9) est dégagé dans la membrane naturelle avant que le désossage effectif ne soit entrepris, au moyen d'une découpe essentiellement verticale faisant en sorte que l'épaule reste dans une partie du porc (8) qui est reliée à la partie restante de la carcasse de porc en une zone proche du cou.

4. Procédé selon la revendication 1, 2 ou 3, **caractérisé en ce que** le désossage s'effectue alors que l'interconnexion du squelette est essentiellement maintenue.
